# FASCICULE DE BREVET EUROPEEN

(11) **EP 1 529 474 B1**
(45) Date de publication et mention de la délivrance du brevet: **04.06.2008**
(21) Numéro de dépôt: 04356164.6
(22) Date de dépôt: 08.10.2004
(51) Int. Cl.: A47J 43/08

(54) **Appareil électroménager comportant un boitier renfermant un moteur reposant sur le boitier par l'intermédiaire d'éléments amortisseurs**
Elektrisches Haushaltsgerät mit einen Gehäuse das einen Motor enthält, der sich mittels Dämpfern auf dem Gehäuse abstützt
Household electric apparatus having a housing containing a motor supported on the housing through damping element

(30) Priorité: 04.11.2003 FR 0312917
(43) Date de publication de la demande: 11.05.2005
(73) Titulaire: SEB S.A., 69130 Ecully (FR)
(72) Inventeur: Lecerf, Joel, 50190 Periers (FR)
(74) Mandataire: Kiehl, Hubert

(56) Documents cités:
- FR-A- 2 794 017

## Description

La présente invention concerne le domaine technique général des appareils électroménagers notamment de préparation culinaire. La présente invention concerne plus particulièrement un appareil comportant un boîtier renfermant un moteur reposant sur le boîtier par l'intermédiaire d'éléments amortisseur disposés aux extrémités longitudinales du moteur.

Il est connu, du document FR 2 794 017, un appareil électroménager comportant un boîtier intégrant un moteur dont l'arbre de sortie débouche à une extrémité longitudinale du boîtier pouvant être accouplée à un pied de mixage. Dans un tel appareil, le moteur est monté sur des éléments amortisseur constitués par des paliers souples s'interposant entre les extrémités longitudinales du moteur et le corps du boîtier. Un tel montage des extrémités du moteur sur des paliers souples présente l'avantage d'amortir les vibrations générées par le moteur et d'offrir une certaine souplesse dans le positionnement axial du moteur, permettant de compenser un éventuel défaut d'alignement lors de l'accouplement du moteur avec le pied de mixage.

De tels éléments amortisseur présentent cependant l'inconvénient d'être simplement posés à chacune des extrémités du moteur, sans être tenus sur ces dernières, ce qui contraint à monter les éléments amortisseur lors de l'étape de montage du moteur sur le corps du boîtier. Il s'ensuit un manque de souplesse dans la logistique de montage des éléments amortisseurs et une complication du montage de l'appareil.

L'invention qui suit vise à pallier ces inconvénients en proposant un boîtier d'appareil électroménager comportant un moteur muni d'éléments amortisseur qui restent solidaires du moteur une fois montés sur ce dernier.

Le but de l'invention est atteint par un appareil électroménager comportant un boîtier renfermant un moteur, le moteur reposant sur le boîtier par l'intermédiaire d'éléments amortisseur disposés aux extrémités longitudinales du moteur, caractérisé en ce que les éléments amortisseur d'extrémité sont reliés entre eux par au moins un bras de liaison élastique de manière à former une seule pièce interface, le bras de liaison assurant le maintien des éléments amortisseurs sur les extrémités longitudinales du moteur.

Une telle caractéristique permet le montage des éléments amortisseur sur le moteur dans une phase de montage préalable et indépendante de la phase de montage du moteur dans le boîtier, ce qui présente l'avantage de simplifier le montage de l'appareil en permettant notamment la livraison du moteur avec les éléments amortisseur prémontés. Une telle caractéristique présente également l'avantage de réduire le nombre de pièces référencées pour la fabrication de l'appareil.

Selon une autre caractéristique de l'invention, les éléments amortisseur d'extrémité sont reliés entre eux par deux bras de liaison élastiques disposés symétriquement par rapport à l'axe longitudinal du moteur.

Une telle caractéristique présente l'avantage d'assurer un excellent maintien des éléments amortisseur sur le moteur, les bras de liaison élastiques contribuant également à protéger latéralement le moteur contre un choc, par exemple lors de son transport.

Selon une autre caractéristique de l'invention, les éléments amortisseur et les bras de liaison élastiques forment une pièce interface monobloc.

Une telle caractéristique permet de simplifier la fabrication des éléments amortisseur.

Selon une autre caractéristique de l'invention, la pièce interface est obtenue par moulage.

Selon une autre caractéristique de l'invention, les éléments amortisseur d'extrémité comportent des logements dans lesquels viennent s'insérer des ergots de positionnement portés par le moteur.

Une telle caractéristique permet d'assurer le positionnement correct des éléments amortisseur sur les extrémités du moteur tout en renforçant l'accrochage des éléments amortisseur.

Selon une autre caractéristique de l'invention, l'un des éléments amortisseur d'extrémité comporte une ouverture centrale pour le passage de l'arbre du moteur.

Selon encore une autre caractéristique de l'invention, au moins l'un des éléments amortisseur d'extrémité comporte des bossages venant coopérer avec des pattes du boîtier pour réaliser le positionnement correct du moteur.

Selon encore une autre caractéristique de l'invention, le boîtier de l'appareil est destiné à être accouplé à un pied de mixage.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil électroménager selon un mode particulier de réalisation de l'invention ;
- la figure 2 est une autre vue en perspective du boîtier de la figure 1 avec sa coquille supérieure démontée;
- la figure 3 représente une vue en perspective des moteur et réducteur contenus dans le boîtier de la figure 1 ;
- la figure 4 est une vue de détail de l'élément amortisseur supportant le moteur.

Seuls les éléments nécessaires à la compréhension de l'invention ont été représentés. Pour faciliter la lecture des dessins, les mêmes éléments portent les mêmes références d'une figure à l'autre.

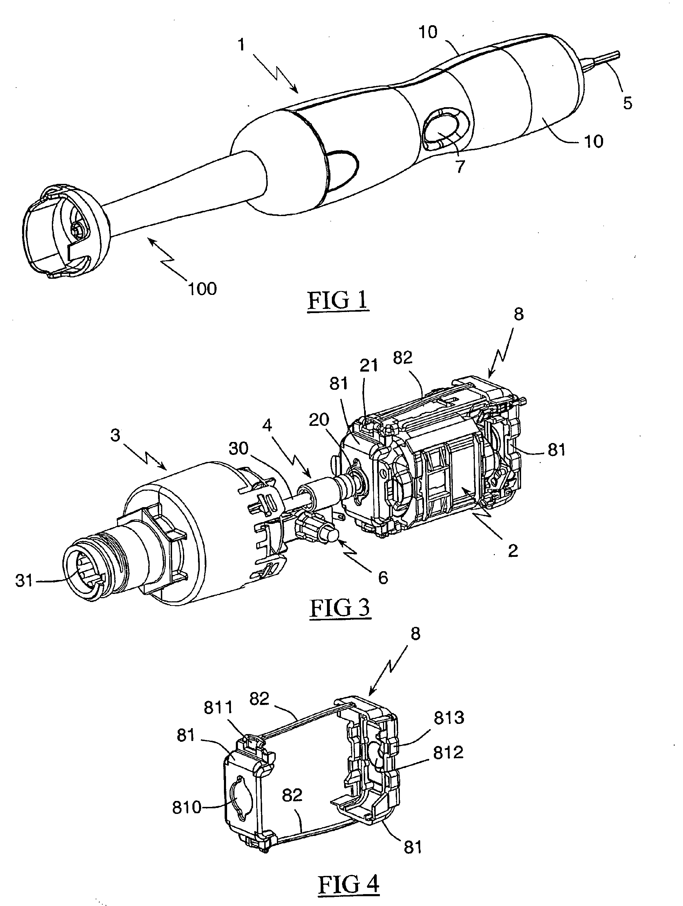

Les figures 1 représente un mixeur comportant un boîtier 1 accouplé à un pied de mixage 100.

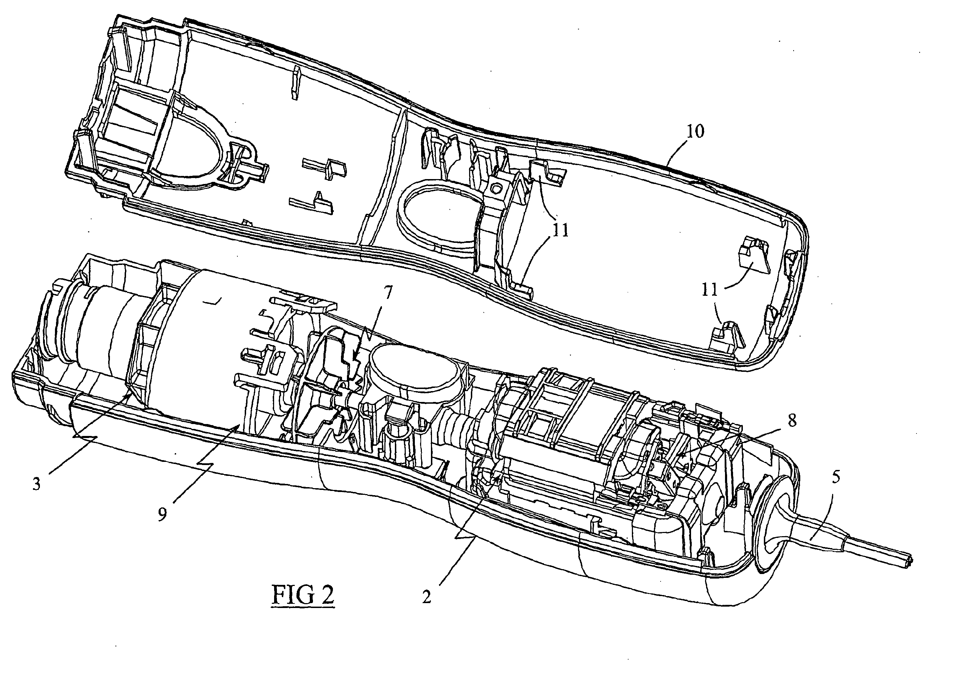

Comme on peut le voir plus précisément sur la figure 2, le boîtier 1 comporte un corps constitué par deux coquilles 10 assemblées l'une sur l'autre qui enferment un moteur 2 et un réducteur 3, ce dernier étant muni d'un entraîneur rotatif 31 agencé en regard d'une ouverture pratiquée dans l'extrémité antérieure du boîtier 1 destinée à être accouplée au pied de mixage 100.

Le moteur 2 comporte un arbre de sortie 20 qui est relié à l'arbre d'entraînement 30 du réducteur 3 par l'intermédiaire d'un cardan 4, l'arbre d'entraînement 30 supportant un ventilateur 9 créant un flux d'air assurant le refroidissement du réducteur 3 et du moteur 2.

Le moteur 2 est alimenté électriquement par un cordon 5 traversant l'extrémité postérieure du boîtier 1, le fonctionnement du moteur 2 étant contrôlé par un interrupteur 6 actionné par un bouton de commande 7 disposé au niveau de la partie centrale du boîtier 1.

Conformément aux figures 2 et 3, le moteur 2 est agencé selon l'axe longitudinal du boîtier 1 et est maintenu, par l'intermédiaire d'une pièce interface 8, sur des pattes 11 portées par les coquilles 10 du boîtier 1.

Plus particulièrement selon l'invention, la pièce interface 8 est constituée par deux éléments amortisseur 81 reliés entre eux par des liaisons élastiques 82, les deux éléments d'amortisseur 81 étant placés aux extrémités du moteur 2 et maintenus sur ces dernières par la déformation élastique des liaisons 82.

Conformément à la figure 4, les deux éléments amortisseurs 81 présentent avantageusement une forme générale rectangulaire s'étendant transversalement au corps du moteur 2 et épousant la forme des extrémités du moteur 2.

L'élément amortisseur 81 disposé du côté de l'arbre de sortie du moteur 2 comporte en son centre une ouverture 810 permettant le passage de l'arbre 20 et est muni à ses extrémités latérales de logements 811 dans lesquelles s'insèrent des ergots de positionnement 21 portés par le corps du moteur 2.

L'élément amortisseur 81 disposé à l'opposé de l'arbre de sortie 20 du moteur comporte quant à lui un logement hémisphérique 812 de réception d'une protubérance d'extrémité de l'arbre moteur 20, l'insertion de cette protubérance dans le logement 812 réalisant le centrage de l'élément amortisseur 81 sur l'extrémité longitudinale du moteur 2. Cet élément amortisseur 81 comporte également des bossages latéraux 813 venant coopérer avec les pattes 11 pour réaliser le centrage du moteur 2 dans l'axe longitudinal du boîtier 1.

Une telle pièce interface présente l'avantage de rester solidaire du moteur une fois montée sur ce dernier, ce qui permet son montage dans une phase préalable au montage du moteur dans le boîtier. Ainsi, la pièce interface sera avantageusement montée sur le moteur sur le lieu de fabrication du moteur, la pièce interface présentant alors l'avantage de protéger le moteur d'éventuels chocs lors de son transport jusqu'à la chaîne de montage de l'appareil.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi dans une variante de réalisation non représentée, les deux éléments amortisseur d'extrémité pourront être reliés par un unique bras de liaison élastique et comporter, à l'opposé de la jonction avec le bras de liaison, des trous venant s'accrocher sur des ergots portés par le moteur pour assurer le maintien de la pièce interface sous la tension générée par le bras de liaison élastique.

## Revendications

1. Appareil électroménager comportant un boîtier (1) renfermant un moteur (2), ledit moteur (2) reposant sur ledit boîtier (1) par l'intermédiaire d'éléments amortisseur (81) disposés aux extrémités longitudinales dudit moteur (2), **caractérisé en ce que** lesdits éléments amortisseur (81) d'extrémité sont reliés entre eux par au moins un bras de liaison (82) élastique de manière à former une seule pièce interface (8), ledit bras de liaison (82) assurant le maintien des éléments amortisseur (81) sur les extrémités longitudinales du moteur (2).

2. Appareil électroménager selon la revendication 1, **caractérisé en ce que** lesdits éléments amortisseur (81) d'extrémité sont reliés entre eux par deux bras de liaison (82) élastiques disposés symétriquement par rapport à l'axe longitudinal du moteur (2).

3. Appareil électroménager selon l'une quelconque des revendications 1 à 2, **caractérisé en ce que** lesdits éléments amortisseur (81) et lesdits bras de liaison (82) élastiques forment une pièce interface (8) monobloc.

4. Appareil électroménager selon la revendication 3, **caractérisé en ce que** ladite pièce interface (8) est obtenue par moulage.

5. Appareil électroménager selon l'une quelconque des revendications 1 à 4, **caractérisé en ce que** lesdits éléments amortisseur (81) d'extrémité comportent des logements dans lesquels viennent s'insérer des ergots de positionnement portés par le moteur (2).

6. Appareil électroménager selon l'une quelconque des revendications 1 à 5, **caractérisé en ce qu**'au moins l'un desdits éléments amortisseur (81) d'extrémité comporte une ouverture centrale (810) pour le passage de l'arbre du moteur (2).

7. Appareil électroménager selon l'une quelconque des revendications 1 à 6, **caractérisé en ce qu**'au moins l'un desdits éléments amortisseur (81) d'extrémité comporte des bossages (813) venant coopérer avec des pattes (11) du boîtier pour réaliser le positionnement correct du moteur (2).

8. Appareil électroménager selon l'une quelconque des revendications 1 à 7, **caractérisé en ce que** ledit boîtier (1) est destiné à être accouplé à un pied de mixage (100).

## Claims

1. A household electrical appliance comprising a housing (1) enclosing a motor (2), said motor (2) resting on said housing (1) via damper elements (81) that are disposed at the longitudinal ends of said motor (2), said household electrical appliance being **characterized in that** said end damper elements (81) are interconnected via at least one resilient link arm (82) holding the damper elements (81) on the longitudinal ends of the motor (2).

2. A household electrical appliance according to claim 1, **characterized in that** said end damper elements (81) are interconnected by two resilient link arms (82) disposed symmetrically about the longitudinal axis of the motor (2).

3. A household electrical appliance according to claim 1 or claim 2, **characterized in that** said damper elements (81) and said resilient link arms (82) form a one-piece interface part (8).

4. A household electrical appliance according to claim 3, **characterized in that** said interface part (8) is obtained by molding.

5. A household electrical appliance according to any one of claims 1 to 4, **characterized in that** said end damper elements (81) are provided with recesses in which positioning lugs carried by the motor (2) come to be inserted.

6. A household electrical appliance according to any one of claims 1 to 5, **characterized in that** at least one of said end damper elements (81) is provided with a central opening (810) for passing the shaft of the motor (2).

7. A household electrical appliance according to any one of claims 1 to 6, **characterized in that** at least one of said end damper elements (81) is provided with studs (813) that come to co-operate with catches (11) in the housing so as to position the motor (2) correctly.

8. A household electrical appliance according to any one of claims 1 to 7, **characterized in that** said housing (1) is designed to be coupled to a blender rod (100).

## Patentansprüche

1. Elektrohaushaltsgerät mit einem Gehäuse (1), das einen Motor (2) einschließt, wobei der Motor (2) auf dem Gehäuse (1) über Dämpfelemente (81) aufliegt, die an den Längsenden des Motors (2) angeordnet sind, **dadurch gekennzeichnet, dass** die endseitigen Dämpfelemente (81) durch mindestens einen elastischen Verbindungsarm (82) miteinander verbunden sind, so dass ein einziges Zwischenteil (8) gebildet wird, wobei der Verbindungsarm (82) das Halten der Dämpfelemente (81) an den Längsenden des Motors (2) gewährleistet.

2. Elektrohaushaltsgerät nach Anspruch 1, **dadurch gekennzeichnet, dass** die endseitigen Dämpfelemente (81) durch zwei elastische Verbindungsarme (82) miteinander verbunden sind, die symmetrisch bezüglich der Längsachse des Motors (2) angeordnet sind.

3. Elektrohaushaltsgerät nach einem der Ansprüche 1 bis 2, **dadurch gekennzeichnet, dass** die Dämpfelemente (81) und die elastischen Verbindungsarme (82) ein einstückiges Zwischenteil (8) bilden.

4. Elektrohaushaltsgerät nach Anspruch 3, **dadurch gekennzeichnet, dass** das Zwischenteil (8) durch Formen erhalten wird.

5. Elektrohaushaltsgerät nach einem der Ansprüche 1 bis 4, **dadurch gekennzeichnet, dass** die endseitigen Dämpfelemente (81) Aufnahmen aufweisen, in welche sich vom Motor (2) getragene Positioniernasen einstecken.

6. Elektrohaushaltsgerät nach einem der Ansprüche 1 bis 5, **dadurch gekennzeichnet, dass** mindestens eines der endseitigen Dämpfelemente (81) eine zentrale Öffnung (810) für den Durchgang der Welle des Motors (2) aufweist.

7. Elektrohaushaltsgerät nach einem der Ansprüche 1 bis 6, **dadurch gekennzeichnet, dass** mindestens eines der endseitigen Dämpfelemente (81) Erhebungen (813) aufweist, die mit Laschen (11) des Gehäuses zusammenwirken, um den Motor (2) einwandfrei zu positionieren.

8. Elektrohaushaltsgerät nach einem der Ansprüche 1 bis 7, **dadurch gekennzeichnet, dass** das Gehäuse (1) dazu bestimmt ist, an einen Mixstab (100) angekoppelt zu werden.
